# EUROPEAN PATENT APPLICATION

(11) **EP 4 804 241 A1**
(43) Date of publication of application: **09.09.2026**
(21) Application number: 24885666.8
(22) Date of filing: 28.10.2024
(51) Int. Cl.: H01M 4/04, H01M 4/13, H01M 50/586, H01M 50/591

(54) **SECONDARY BATTERY ELECTRODE AND SECONDARY BATTERY**

(30) Priority: 31.10.2023 JP 2023186320
(71) Applicant: Panasonic Intellectual Property Management Co., Ltd., Kadoma-shi, Osaka 571-0057 (JP)
(72) Inventor: UTSUMIYA, Kazutoshi, Kadoma-shi, Osaka 571-0057 (JP)
(74) Representative: Eisenführ Speiser
(86) International application number: PCT/JP2024/038352
(87) International publication number: WO 2025/094893

(57) **Abstract**

An electrode for secondary batteries includes: an electrode current collector in the form of a sheet, an electrode mixture layer supported on a principal surface of the electrode current collector, and having an end face ME continuous with an end face CE of the electrode current collector; and a protective layer partially covering the end face CE of the electrode current collector from a boundary between the electrode current collector and the electrode mixture layer, in the thickness direction of the electrode current collector.

## Description

### [Technical Field]

The present disclosure relates to an electrode for secondary batteries and a secondary battery.

### [Background Art]

A secondary battery includes a pair of electrodes, and an electrolyte. At least one of the pair of electrodes includes a sheet-like electrode current collector, and an electrode mixture layer supported on a principal surface of the electrode current collector. The electrode mixture layer contains an electrode active material that absorbs and releases lithium ions.

Patent Literature 1 proposes "an electrode for batteries including a current collector, an active material coated on a surface of the electrode current collector, and an insulating material or an electrode active material mixture coated on a peripheral portion of the electrode current collector".

### [Citation List]

### [Patent Literature]

Patent Literature 1: Japanese Laid-Open Patent Publication No. H11-111302

### [Summary of Invention]

### [Technical Problem]

It has been required to suppress the deterioration in cycle characteristics of secondary batteries.

### [Solution to Problem]

One aspect of the present disclosure relates to an electrode for secondary batteries, including: an electrode current collector in a form of a sheet; an electrode mixture layer supported on a principal surface of the electrode current collector, and having an end face ME continuous with an end face CE of the electrode current collector; and a protective layer partially covering the end face CE of the electrode current collector from a boundary between the electrode current collector and the electrode mixture layer, in a thickness direction of the electrode current collector.

Another aspect of the present disclosure relates to a secondary battery, including: a pair of electrodes; and an electrolyte, wherein at least one of the pair of electrodes is the above-described electrode for secondary batteries.

### [Advantageous Effects of Invention]

According to the present disclosure, it is possible to suppress the deterioration in cycle characteristics of secondary batteries.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic top view of an example of an electrode for secondary batteries according to an embodiment of the present disclosure.
[FIG. 2] A schematic sectional view of an essential part of an example of an electrode for secondary batteries according to an embodiment of the present disclosure.
[FIG. 3] A schematic sectional view of an essential part of another example of an electrode for secondary batteries according to an embodiment of the present disclosure.
[FIG. 4] A schematic sectional view of an essential part of yet another example of an electrode for secondary batteries according to an embodiment of the present disclosure.
[FIG. 5] A schematic sectional view of an essential part of still another example of an electrode for secondary batteries according to an embodiment of the present disclosure.
[FIG. 6] A partially cut-away schematic oblique view of a secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

An electrode for secondary batteries according to an embodiment of the present disclosure includes an electrode current collector in the form of a sheet, an electrode mixture layer supported on a principal surface of the electrode current collector and having an end face ME continuous with an end face CE of the electrode current collector, and a protective layer partially covering the end face CE of the electrode current collector from the boundary between the electrode current collector and the electrode mixture layer, in the thickness direction of the electrode current collector. The electrode mixture layer contains an electrode active material that absorbs and releases lithium ions. The electrode mixture layer expands in association with absorbing lithium ions. The electrode mixture layer may be supported on one principal surface of the electrode current collector, and may be supported on both principal surfaces of the electrode current collector. When the electrode mixture layer is supported on both principal surfaces of the electrode current collector, the electrode mixture layer supported on one principal surface of the electrode current collector may be referred to as a first electrode mixture layer, and the electrode mixture layer supported on the other principal surface of the electrode current collector may be referred to as a second electrode mixture layer. The electrode may have a current collector-exposed portion where no electrode mixture layer is formed on either surface of the electrode current collector. Note that the end face of the electrode current collector-exposed portion is not included in the aforementioned end face CE of the electrode current collector.

The end face of the electrode current collector can be protected by covering with a protective layer. For example, by covering the entire end face of the electrode current collector with the protective layer, the occurrence of an internal short circuit when an external force is applied to the battery can be suppressed. In the case of a negative electrode, during charging and discharging, dendrites of lithium tends to deposit on the end face of the negative electrode current collector which is exposed at the negative electrode end face, and an internal short circuit may occur in some cases due to the deposition of dendrites. By covering the entire end face of the negative electrode current collector with the protective layer, the deposition of dendrites can be suppressed. In the case of a wound electrode group, by covering the entire end faces at both ends in the width directional of the belt-shaped electrode included in the electrode group with the protective layer, the protection effect with the protective layer can be efficiently obtained. The wound electrode group is configured by winding a pair of electrodes, with a separator interposed therebetween.

However, in the case where the protective layer covers the entire end face CE of the electrode current collector (i.e., when a later-described TD coverage rate is 100%) in the thickness direction of the electrode current collector, when the electrode mixture layer comes in strong contact with the protective layer due to the expansion of the electrode mixture layer during charging and discharging, stress may be generated at an electrode end. This may cause cracks at the electrode end, to cause the electrode mixture layer and the protective layer to fall off, resulting in deterioration in cycle characteristics in some cases.

In this respect, in the present disclosure, in the thickness direction of the electrode current collector, the protective layer partially covers the end face CE of the electrode current collector from the boundary between the electrode current collector and the electrode mixture layer. In this case, even though stress is generated at the electrode end due to the expansion of the electrode mixture layer, the above stress can be relaxed by releasing it to the portion where the end face CE of the electrode current collector is not covered with the protective layer. In this way, while protecting the end face of the electrode current collector with the protective layer, it is possible to suppress the falling-off of the electrode mixture layer and the protective layer due to the stress generated at the electrode end, and the deterioration in cycle characteristics associated therewith.

From the viewpoint of suppressing the deterioration in cycle characteristics, the coverage rate in the thickness direction (TD direction) of the electrode current collector (hereinafter may be referred to as a "TD coverage rate") of the end face CE of the electrode current collector with the protective layer is preferably 95% or less, more preferably 90% or less, even more preferably 85% or less. From the viewpoint of protecting the end face of the electrode current collector, the TD coverage rate of the end face CE of the electrode current collector with the protective layer may be 5% or more, and may be 20% or more or 50% or more. In the case of a negative electrode, the TD coverage rate of the end face CE of the electrode current collector with the protective layer may be 50% or more or 60% or more, and may be 80% or more. The TD coverage rate of the end face CE of the electrode current collector with the protective layer may be, for example, within the range of 5% or more and 95% or less, and may be within the range of 20% or more and 90% or less.

The coverage rate (TD coverage rate) of the end face CE of the electrode current collector with the protective layer in the thickness direction (TD direction) of the electrode current collector can be determined in the following manner.

The secondary battery is disassembled, from which the electrode is taken out, to obtain a cross section sample of the electrode in its thickness direction. The cross section may be formed by embedding the electrode in resin, followed by polishing so that a surface at the electrode end perpendicular to the principal surface of the electrode current collector can be obtained. The cross section may be formed using a cross-section polisher (CP) method.

Next, an image of the cross section sample is obtained using a scanning electron microscope (SEM). Using the SEM image of the cross section sample, a length CL of the end surface CE of the electrode current collector (thickness of the electrode current collector) is determined. A length PL of a portion of the end surface CE of the electrode current collector covered with the protective layer is determined. PL/CL × 100 is calculated as the TD coverage rate. Several (e.g., 3 to 7) cross section samples are prepared, for each of which the TD coverage rate is determined, to calculate an average value of them.

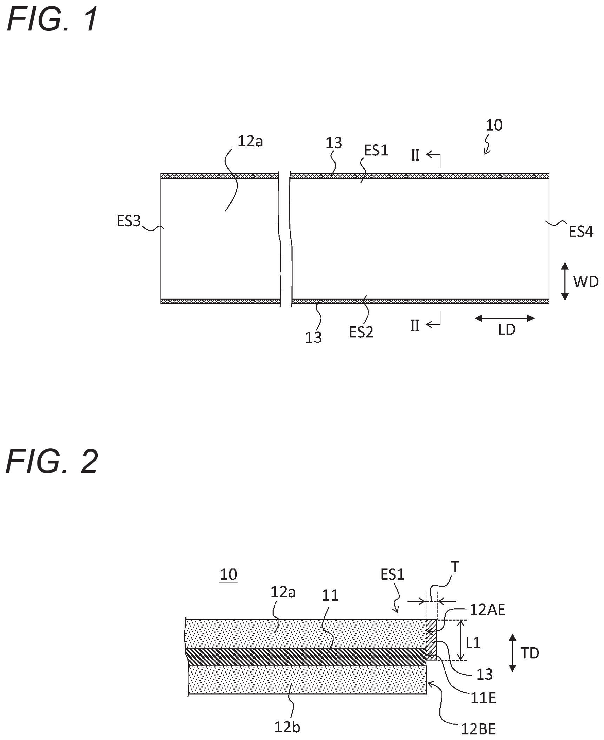

From the viewpoint of protecting the electrode current collector, the average thickness of the protective layer is preferably 1 µm or more, and may be 1 µm or more and 100 µm or less. The average thickness of the protective layer may be, for example, 0.06 to 6.6 times as large as the thickness of the electrode current collector. The average thickness of the protective layer refers to an average value of the largest thickness of the protective layer (e.g., T in FIGS. 2 to 5) in a cross section of the electrode in its thickness direction. The average thickness of the protective layer can be determined by measuring the largest thickness of the protective layer in a cross section of the electrode using the SEM image of the above cross section sample, to obtain the largest thickness for each of the above several (e.g., 3 to 7) cross section samples, to calculate an average value of them.

It is preferable that the protective layer partially covers the end face CE of the electrode current collector, and in addition, covers at least a part of the end face ME of the electrode mixture layer. In this case, since the electrode mixture layer and the protective layer tend to come in strong contact with each other in association with the expansion of the electrode mixture layer, the stress relaxing effect by the partial covering of the end face CE with the protective layer can be remarkably obtained. Furthermore, in this case, the end face ME of the electrode mixture layer, which is continuous with the end face CE of the electrode current collector, can also be protected. By covering the boundary between the end face CE and the end face ME with the protective layer, the delamination of the end portion of the electrode mixture layer during expansion and contraction can be suppressed. The end face CE of the electrode current collector can be easily covered with the protective layer.

When the electrode mixture layer is supported on both principal surfaces of the electrode current collector, each of the electrode mixture layers (the first electrode mixture layer and the second electrode mixture layer) formed on both principal surfaces of the electrode current collector has an end face ME continuous with the end face CE. The protective layer may cover both of the end faces ME of the first electrode mixture layer and the second electrode mixture layer, and may cover the end face ME of one of the first electrode mixture layer and the second electrode mixture layer.

When the electrode is viewed in the direction normal to its principal surface, the electrode which is rectangular in shape has four sides. In this case, the protective layer may be formed, for example, on an end face corresponding to at least one of the four sides, may be formed on two end faces corresponding to any two of the four sides, and may be formed on four end faces corresponding to the four sides. For example, in the belt-shaped electrode of FIG. 1, the protective layer is formed on the end faces at ends ES1 and ES2 (or ends ES1 to ES4). The length of the portion where the end face (end face CE) corresponding to any one side is covered with the protective layer may be 0.8 times or more as large as the length L of that one side, and may be approximately 1 time as large as the length L of that one side.

The protective layer may be an electrode mixture layer, and may contain the same component as the electrode mixture layer. In this case, it is advantageous in terms of achieving high capacity. In this case, although the protective layer can also expand, the stress generated due to the expansion of the protective layer can be released to the portion where the end face CE is not covered with the protective layer, and the stress can be relaxed. The protective layer may be an electrically insulating layer. The insulating layer contains a resin material. Examples of the resin material include fluorocarbon resins, such as polyvinylidene fluoride and polytetrafluoroethylene.

The electrode can be produced by, for example, applying an electrode material slurry onto a principal surface of a current collector sheet (e.g., a metal foil, alloy foil), drying the slurry to form an applied film, and rolling the applied film as necessary, to form a laminate of the electrode current collector sheet and an electrode mixture layer, which is then cut in a predetermined size. The cutting of the laminate may be performed using a predetermined blade (e.g., a slitting blade, etc.). The electrode mixture layer may be formed on one principal surface of the electrode current collector sheet, and may be formed on both principal surfaces of the electrode current collector sheet.

The cutting of the laminate may be performed by laser processing, plasma processing, or gas fusion cutting. In this case, a protective layer may be formed on the cut surface by utilizing the melting and solidification of the cut portion of the laminate. The protective layer can be formed during the cutting process by appropriately adjusting the cutting conditions. In this case, the protective layer contains the same components as the electrode mixture layer.

The method for forming a protective layer is not particularly limited. The protective layer may be formed by, other than the above methods, applying a predetermined processing solution onto a predetermined region of the electrode end face, followed by drying. The protective layer may be formed by immersing a predetermined region of the electrode end face in a processing solution, followed by drying. The processing solution includes an electrode mixture or an electrically insulative material, and a dispersion medium or a solvent. For the dispersion medium or the solvent, N-methyl-2-pyrrolidone (NMP) and the like are used. The application method is not particularly limited. Examples of the application method include a dispenser method and a spray method. The drying method is not particularly limited. Drying may be performed by natural drying or using a drying oven. The electrode mixture may be a positive electrode mixture or a negative electrode mixture described below. The insulative material may be a fluorocarbon resin (e.g., polyvinylidene fluoride, polytetrafluoroethylene, etc.).

FIG. 1 is a schematic top view of an example of an electrode for secondary batteries according to an embodiment of the present disclosure. The electrode in FIG. 1 is belt-shaped. In FIG. 1, LD indicates the length direction of a belt-shaped electrode 10 (the winding direction when used in a wound electrode group), and WD indicates the width direction of the belt-shaped electrode 10. The shaded area in FIG. 1 indicates a protective layer 13 that protects the end of the electrode 10. FIG. 2 is a schematic sectional view of an essential part of an example of an electrode for secondary batteries according to an embodiment of the present disclosure. FIG. 2 shows an essential part of the II-II cross section of the electrode 10 in FIG. 1 (near the end ES1 of the electrode 10). In FIG. 2, TD indicates the thickness direction of an electrode current collector 11 (electrode 10), T indicates the thickness (maximum thickness) of a protective layer 13, and L1 indicates the length of the protective layer 13 in the TD direction.

The belt-shaped electrode 10 includes the electrode current collector 11 in the form of a sheet, and electrode mixture layers 12a, 12b supported on both surfaces of the electrode current collector 11. The electrode 10 has both ends ES1, ES2 in the width direction (WD direction) and both ends ES3, ES4 in the length direction (LD direction). The end faces at the ends ES1 to ES4 include, respectively, an end face 11E (end face CE) of the electrode current collector 11, and end faces 12AE, 12BE (end face ME) of the electrode mixture layers 12a, 12b continuous with the end face 11E.

In the electrode 10, the protective layer 13 is formed on each of the end faces at the ends ES1 and ES2. Although a detailed description will be given below of the protective layer 13 formed on the end face at the end ES1, the protective layer 13 formed on the end face at the end ES2 is formed similarly to the protective layer 13 at the end ES1.

As illustrated in FIG. 2, the electrode 10 includes the protective layer 13 partially covering the end face 11E of the electrode current collector 11 from the boundary between the electrode current collector 11 and the electrode mixture layer 12a, in the thickness direction TD of the electrode current collector 11. The protective layer 13 partially covers the end face 11E of the electrode current collector 11, and in addition, covers at least a part of the end face 12AE of the electrode mixture layer 12a, and does not cover the end face 12BE of the electrode mixture layer 12b.

Even though stress is generated at the electrode end when the expanded electrode mixture layer 12a heavily contacts the protective layer 13, the stress will be released to the portion of the end face 11E not covered with the protective layer 13, and relaxed.

The end face 12BE of the electrode mixture layer 12b and a part of the end face CE of the electrode current collector 11 on the end face 12BE side are not covered with the protective layer 13. Therefore, even when the electrode mixture layer 12b expands, the electrode mixture layer 12b is unlikely to contact the protective layer 13. Supposing that the coverage rate in the TD direction of the end face 11E is high, even though the expanded electrode mixture layer 12b comes in contact with the protective layer 13, the contact is weak, and the stress generated thereby at the electrode end is small.

As a result of the above, it is possible to protect the ends ES1, ES2 of the electrode 10 (the end face 11E of the electrode current collector 11) with the protective layer 13, and relax the stress generated at the electrode end during expansion of the electrode mixture layer by partial covering with the protective layer 13. Thus, the falling off of the electrode mixture layer (or protective layer) due to the above stress can be suppressed.

Although the end face 12BE is not covered with the protective layer 13, at least a part of the end face 11E and at least a part (preferably the entire) of the end face 12AE are covered with the protective layer 13. This can sufficiently protect the ends ES1, ES2 of the positive electrode 10.

The coverage rate in the thickness direction (TD direction) of the electrode 10 (hereinafter may be referred to as the "TD coverage rate") of the end face 12AE of the electrode mixture layer 12a with the protective layer may be 70% or more, and may be 90% or more. From the viewpoint of protecting the ends ES1, ES2 of the electrode 10, the end face 12AE preferably has a higher TD coverage rate.

The protective layer 13 of FIG. 1 disposed at the ends ES1, ES2 of the electrode 10 is formed continuously and integrally in the LD direction, which however may be formed intermittently or partially. When the electrode 10 is viewed in the direction normal to the principal surface thereof, the ratio of the length in the LD direction of the protective layer 13 covering the end face CE of the electrode current collector at the end ES1 (end ES2), relative to the length in the LD direction of the electrode (hereinafter may be referred to as the "LD coverage rate") is approximately 100%, but is not limited thereto. The LD coverage rate may be, for example, within the range of 50% or more and 100% or less, and may be within the range of 70% or more and 100% or more.

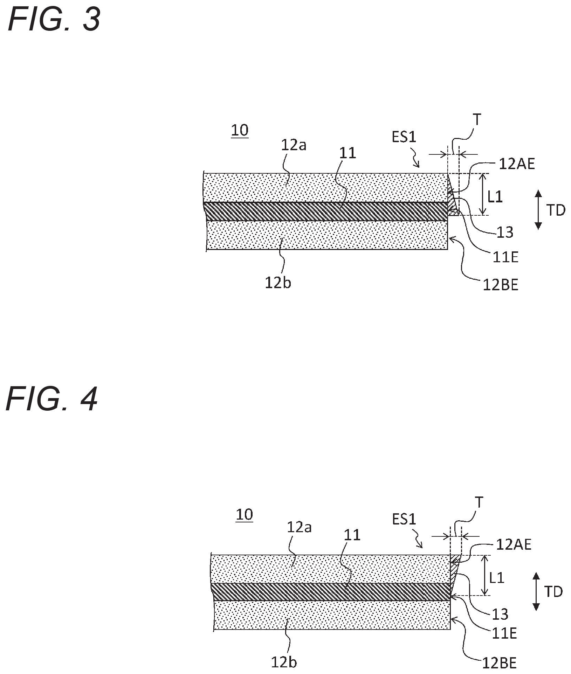

Although the protective layer 13 of FIG. 2 has an almost constant thickness, the protective layer is not limited to the protective layer 13 as illustrated in FIG. 2. The protective layer may be the protective layer 13 as illustrated in FIGS. 3 to 5. Note that the protective layer is not limited to the protective layer 13 as illustrated in FIGS. 2 to 5.

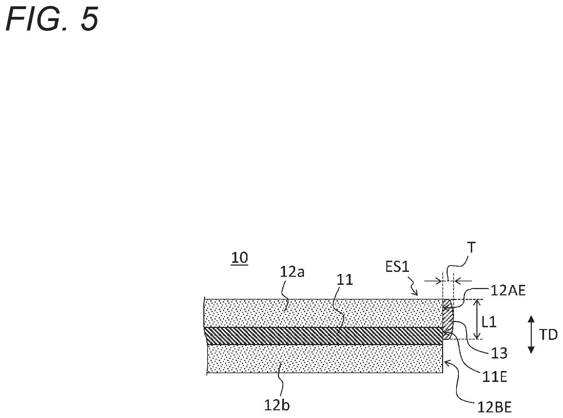

The protective layer 13 of FIG. 3 has a thickness which is smaller at the end on the electrode current collector 11 side than at the end on the electrode mixture layer 12a side. With the protective layer 13 of FIG. 3, the thickness of the protective layer covering the electrode current collector 11 can be ensured to be large, which can easily reduce the risk of the electrode current collector to be exposed. The protective layer 13 of FIG. 4 has a thickness which is larger at the end on the electrode current collector 11 side than at the end on the electrode mixture layer 12a side. With the protective layer 13 of FIG. 4, the followability to the electrode deformation can be easily improved, and the falling off of the protective layer from the electrode current collector during the electrode deformation can be easily suppressed. The protective layer 13 of FIG. 5 has a thickness which is larger in the central portion than at both ends in the thickness direction (TD direction) of the electrode current collector 11. With the protective layer 13 of FIG. 5, the shape stability of the protective layer is high, so that the protective layer is unlikely to fall off.

The belt-shaped electrode 10 has both ends ES3, ES4 in the length direction (LD direction). In the wound electrode group, one of the ends ES3, ES4 of the electrode 10 is the end on the winding start side, and the other of the ends ES3, ES4 of the electrode 10 is the end on the winding finish side. At the ends ES3, ES4 of the electrode 10, too, the protective layer may be further formed, similar to at the ends ES1, ES2.

The electrode 10, which has the protective layer 13, may also have a second protective layer partially covering the end face 11E of the electrode current collector 11 from the boundary between the electrode current collector 11 and the electrode mixture layer 12b, in the thickness direction (TD direction) of the electrode current collector 11. The second protective layer partially covers the end face 11E of the electrode current collector 11 and in addition, may cover at least a part of the end face 12BE of the electrode mixture layer 12b.

The thickness of the electrode 10 is, for example, 100 to 300 µm. The thickness of the electrode current collector 11 is, for example, 5 to 30 µm. The average length of the protective layer 13 in the thickness direction (TD direction) of the electrode current collector 11 may be 0.3 to 40 times as large as the thickness of the electrode current collector 11. The average length of the protective layer 13 in the thickness direction (TD direction) of the electrode current collector 11 may be 10 µm or more and 200 µm or less. The average length in the TD direction of the protective layer can be determined by observing the protective layer covering the electrode end face using a SEM, etc., to measure the length in the TD direction (L1 in FIGS. 2 to 5) at any plurality of points (10 to 20 points) on the protective layer, and averaging the measured values. The average length in the TD direction of the portion of the protective layer 13 covering the end face 12AE of the electrode mixture layer 12a may be 0.8 to 1 times as large as the length in the TD direction of the end face 12AE.

The secondary battery according to an embodiment of the present disclosure includes a pair of electrodes and an electrolyte. At least one of the pair of electrodes is the electrode for secondary batteries according to an embodiment of the present disclosure. One of the pair of electrodes is a positive electrode, and the other of the pair of electrodes is a negative electrode. The positive electrode and the negative electrode are, for example, wound or stacked, with a separator interposed therebetween.

Examples of the secondary battery include a lithium-ion secondary battery, a lithium metal secondary battery, and a nonaqueous electrolyte secondary battery, such as a solid battery including a gel electrolyte or a solid electrolyte. That is, the secondary battery may be a liquid secondary battery including an electrolyte solution as the electrolyte, and may be an all-solid secondary battery including a solid electrolyte.

A detailed description will be given below of each component of the secondary battery.

### [Positive electrode]

The positive electrode includes a positive electrode current collector, and a positive electrode mixture layer supported on the positive electrode current collector. The positive electrode mixture layer is constituted of a positive electrode mixture. The positive electrode mixture layer is supported on one or both principal surfaces of the positive electrode current collector.

The positive electrode mixture contains a positive electrode active material as an essential component, and can optionally contain a binder, a conductive agent, a thickener, and other components. The positive electrode active material can be a material that reversibly absorbs and releases lithium ions. The positive electrode active material may be, for example, a lithium-containing transition metal oxide. Examples of the transition metal include Ni, Co, and Mn. Typical examples of the lithium-containing transition metal oxide are lithium cobalt oxide, lithium nickel oxide, and the like whose crystal structure is a layered rock-salt type structure.

The positive electrode mixture layer can be formed by, for example, applying a positive electrode mixture slurry containing a positive electrode mixture and a dispersion medium onto a surface of a positive electrode current collector, followed by drying. The applied film after drying may be rolled, as necessary. The positive electrode mixture layer may be formed on one surface or both surfaces of the positive electrode current collector. As the dispersion medium for the positive electrode mixture slurry, N-methyl-2-pyrrolidone (NMP) and the like are used.

Examples of the lithium-containing transition metal oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMPO₄, and Li₂MPO₄F, where M is at least one selected from the group consisting of Na, Mg, Sc, Y, Mn, Fe, Co, Ni, Cu, Zn, Al, Cr, Pb, Sb, and B. Here, 0 < a ≤ 1.2, 0 < b ≤ 0.9, and 2.0 ≤ c ≤ 2.3. The value "a" representing the molar ratio of lithium increases and decreases during charging and discharging.

As the lithium-containing transition metal oxide, LiₐNi_{b}M_{1-b}O₂, where M is at least one selected from the group consisting of Mn, Co, and Al, 0 < a ≤ 1.2, and 0.3 ≤ b < 1, may be used. From the viewpoint of achieving high capacity, more preferably, 0.85 ≤ b < 1 is satisfied. From the viewpoint of the stability of the crystal structure, LiₐNi_{b}Co_{c}Al_{d}O₂ containing Co and Al as the element represented by M, where 0 < a ≤ 1.2, 0.85 ≤ b < 1, 0 < c < 0.15, 0 < d ≤ 0.1, and b+c+d = 1, may be used.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; and polyethersulfone. The binder may be used singly or in combination of two or more kinds.

Examples of the conductive agent include carbon materials, such as graphite, carbon black, such as acetylene black, and carbon fibers (carbon nanotubes (CNTs), carbon fibers other than CNTs). The conductive agent may be used singly or in combination of two or more kinds.

The positive electrode current collector that can be used include a non-porous conductive substrate (metal foil, etc.) and a porous conductive substrate (mesh, net, punched sheet, etc.). Examples of the material of the positive electrode current collector include stainless steel, aluminum, aluminum alloy, and titanium. The thickness of the positive electrode current collector is, although not particularly limited to, preferably 1 to 50 µm, and more desirably 5 to 20 µm.

### [Negative electrode]

The negative electrode may be a negative electrode on which lithium metal deposits during charging, and may be a negative electrode that absorbs lithium ions during charging.

The negative electrode includes a belt-shaped negative electrode current collector. The negative electrode may have a negative electrode current collector, and a negative electrode mixture layer supported on the negative electrode current collector. The negative electrode mixture layer is constituted of a negative electrode mixture. The negative electrode mixture layer is supported on one or both principal surfaces of the negative electrode current collector.

The negative electrode mixture contains a negative electrode active material as an essential component, and may optionally contain a binder, a conductive agent, a thickener, and other components. The negative electrode mixture layer can be formed by, for example, applying a negative electrode mixture slurry containing a negative electrode mixture and a dispersion medium onto a surface of a negative electrode current collector, followed by drying. The applied film after drying may be rolled, as necessary. The negative electrode mixture layer may be formed on one surface or both surfaces of the negative electrode current collector.

The negative electrode active material can be a material that reversibly absorbs and release lithium ions. The negative electrode active material may be lithium metal or a lithium alloy. That is, the negative electrode mixture layer may be a negative electrode active material layer composed of a foil-like lithium metal or lithium alloy.

Examples of the negative electrode active material that absorbs and releases lithium ions include a carbon material, a metal material such as Si or Sn, an alloy material containing Si, Sn, etc., a metal compound containing Si, Sn, etc., and a metal oxide containing lithium. Examples of the metal oxide containing lithium include a spinel-type lithium titanium oxide and a spinel-type lithium manganese oxide.

The carbon material can be graphite, graphitizable carbon (soft carbon), non-graphitizable carbon (hard carbon), and the like. In particular, graphite is preferred because of its excellent stability during charging and discharging and its low irreversible capacity.

Graphite refers to a carbon material having an interplanar spacing d002 of the (002) plane as measured by X-ray diffractometry of, for example, 0.340 nm or less. The crystallite size Lc(002) of the graphite particle as measured by X-ray diffraction diffractometry, for example, may be 5 nm or more, may be 5 nm or more and 300 nm or less, and may be 10 nm or more and 200 nm or less.

The negative electrode active material may be a composite material containing Si. The composite material containing Si is suitable as a negative electrode active material because of its high capacity. This composite material contains a silicon phase. Silicon is capable of reversibly forming an alloy with lithium. This composite material is a material capable of reversibly absorbing and desorbing lithium ions.

The composite material includes silicon phases and a matrix phase in which the silicon phases are dispersed. The matrix phase may be constituted of a material having lithium-ion conductivity. The matrix phase includes, for example, at least one selected from the group consisting of a silicon oxide phase and a carbon phase.

The silicon oxide phase contains Si and O, and may additionally contain a third element other than Si and O. The silicon oxide phase may be constituted of SiO₂, may be constituted of a lithium silicate, or may be constituted of both. The lithium silicate can be represented by, for example, Li_{2y}SiO_{2+y} where 0 < y < 2. A composite material including a silicon oxide phase constituted of SiO₂ may be represented as SiOₓ where 0.5 ≤ x ≤ 1.6.

When using a carbon material and a composite material in combination, the proportion of the composite material in the negative electrode active material (the total of the carbon material and the composite material) is, for example, 1 mass% or more and 20 mass% or less, may be 3 mass% or more and 15 mass% or less, and may be 3 mass% or more and 10 mass% or less. In this case, improved cycle characteristics and high capacity are likely to be achieved in a well-balanced manner.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include: carbons, such as acetylene black; carbon fibers, such as carbon nanotubes (CNTs) and carbon fibers other than CNTs; metal fibers; and metal powders, such as aluminum. The conductive agent may be used singly or in combination of two or more kinds.

Examples of the thickener include: cellulose derivatives (cellulose ether, etc.), such as carboxymethyl cellulose (CMC), modified products thereof (including salts such as Na salts), and methylcellulose; and saponified products of a polymer having a vinyl acetate unit, such as polyvinyl alcohol. The thickener may be used singly or in combination of two or more kinds.

The negative electrode current collector that can be used include a non-porous conductive substrate (metal foil, etc.) and a porous conductive substrate (mesh, net, punched sheet, etc.). Examples of the material of the negative electrode current collector include stainless steel, nickel, nickel alloy, copper, and copper alloy. The thickness of the negative electrode current collector is, although not particularly limited to, preferably 1 to 50 µm, and more desirably 5 to 20 µm.

### [Electrolyte]

The electrolyte may be a liquid electrolyte (electrolyte solution), may be a gel electrolyte, and may be a solid electrolyte. The liquid electrolyte is, for example, an electrolyte solution containing a nonaqueous solvent and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

For example, a nonaqueous electrolyte in a liquid state is prepared by dissolving a salt in a nonaqueous solvent. The salt is an electrolyte salt that ionically dissociates in the electrolyte, and can include, for example, a lithium salt. The electrolyte can contain various additives. The electrolyte is usually used as it is in a liquid state, but may be in a state in which the fluidity is restricted by a gelling agent or the like.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). A cyclic carbonic acid ester having an unsaturated bond, such as vinylene carbonate (VC), may be used. A cyclic carbonic acid ester having a fluorine atom, such as fluoroethylene carbonate (FEC), may be used. Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imide salts. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imide salts include lithium bisfluorosulfonylimide (LiN(FSO₂)₂), lithium bistrifluoromethanesulfonyl imide (LiN(CF₃SO₂)₂), lithium trifluoromethanesulsulfonyl nonafluorobutanesulsulfonyl imide (LiN(CF₃SO₂)(C₄F₉SO₂)), and lithium bispentafluoroethanesulsulfonyl imide (LiN(C₂F₅SO₂)₂). The lithium salt may be used singly or in combination of two or more kinds. The concentration of the lithium salt in the nonaqueous electrolyte solution is, for example, 0.5 mol/L or more and 2 mol/L or less.

### [Separator]

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. As the material of the separator, polyolefins, such as polypropylene and polyethylene, are preferred.

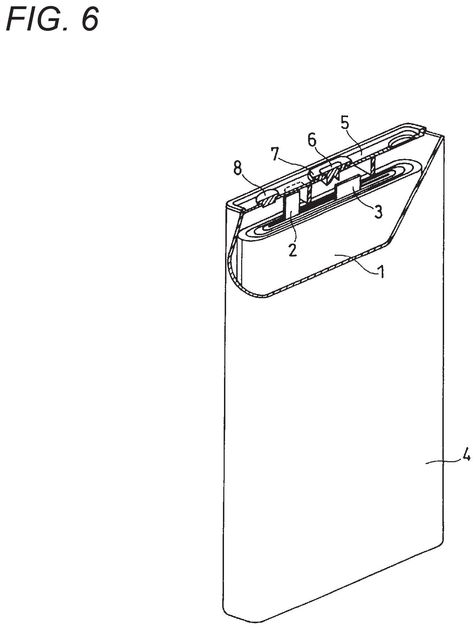

A description will be given below of a structure of a prismatic secondary battery as an example of the secondary battery according to an embodiment of the present disclosure, with reference to FIG. 6. FIG. 6 is a partially cut-away schematic oblique view of a secondary battery according to an embodiment of the present disclosure.

The battery includes a bottomed prismatic battery case 4, and an electrode group 1 and a nonaqueous electrolyte (not shown) housed in the battery case 4. The electrode group 1 has a long belt-shaped negative electrode, a long belt-shaped positive electrode, and a separator interposed therebetween and preventing them from directly contacting with each other. The electrode group 1 is formed by winding the negative electrode, the positive electrode, and the separator around a flat plate-like winding core, and then removing the winding core. At least one of the positive electrode and the negative electrode is an electrode for secondary batteries according to an embodiment of the present disclosure.

A negative electrode lead 3 is attached at its one end to the negative electrode current collector, by means of welding or the like. The other end of the negative electrode lead 3 is electrically connected, via an insulating plate made of resin (not shown), to a negative electrode terminal 6 disposed at a sealing plate 5. The negative electrode terminal 6 is electrically insulated from the sealing plate 5 by a gasket 7 made of resin. A positive electrode lead 2 is attached at its one end to the positive electrode current collector, by means of welding or the like. The other end of the positive electrode lead 2 is electrically connected, via the insulating plate, to the back side of the sealing plate 5. In short, the positive electrode lead 2 is electrically connected to the battery case 4 serving as a positive electrode terminal. The insulating plate serves to insulate the electrode group 1 from the sealing plate 5, as well as to insulate the negative electrode lead 3 from the battery case 4. The peripheral edge of the sealing plate 5 is fitted to the opening end of the battery case 4, and the fitting portion is laser-welded. In this way, the opening of the battery case 4 is sealed with the sealing plate 5. An injection port for nonaqueous electrolyte provided in the sealing plate 5 is closed with a sealing plug 8.

### (Supplementary notes)

The above description of embodiments discloses the following techniques.

### (Technique 1)

An electrode for secondary batteries, comprising:
an electrode current collector in a form of a sheet;
an electrode mixture layer supported on a principal surface of the electrode current collector, and having an end face ME continuous with an end face CE of the electrode current collector; and
a protective layer partially covering the end face CE of the electrode current collector from a boundary between the electrode current collector and the electrode mixture layer, in a thickness direction of the electrode current collector.

### (Technique 2)

The electrode for secondary batteries according to technique 1, wherein in the thickness direction of the electrode current collector, a coverage rate of the end face CE with the protective layer is 95% or less.

### (Technique 3)

The electrode for secondary batteries according to technique 1 or 2, wherein an average thickness of the protective layer is 1 µm or more.

### (Technique 4)

The electrode for secondary batteries according to any one of techniques 1 to 3, wherein the protective layer partially covers the end face CE, and in addition, covers at least a part of the end face ME.

### (Technique 5)

The electrode for secondary batteries according to technique 4, wherein the protective layer has a thickness which is larger at an end on the electrode current collector side than at an end on the electrode mixture layer side.

### (Technique 6)

The electrode for secondary batteries according to technique 4, wherein the protective layer has a thickness which is smaller at an end on the electrode current collector side than at an end on the electrode mixture layer.

### (Technique 7)

The electrode for secondary batteries according to technique 4, wherein the protective layer has a thickness which is larger in a center portion than at both ends in the thickness direction of the electrode current collector.

### (Technique 8)

The electrode for secondary batteries according to any one of techniques 4 to 7, wherein an average length of the protective layer in the thickness direction of the electrode current collector is 10 µm or more and 200 µm or less.

### (Technique 9)

The electrode for secondary batteries according to any one of techniques 1 to 8, wherein the protective layer contains a same component as the electrode mixture layer.

### (Technique 10)

A secondary battery, comprising:
a pair of electrodes; and an electrolyte, wherein
at least one of the pair of electrodes is the electrode for secondary batteries according to any one of techniques 1 to 9.

The present disclosure will be more specifically described below with reference to Examples. The present disclosure, however, is not limited to the following Examples.

### <<Secondary batteries A1 to A3, B1>>

### (Production of positive electrode)

A layered rock-salt type lithium-containing transition metal oxide (NCA: positive electrode active material) containing Li, Ni, Co, and Al (where the molar ratio of Li to the total of Ni, Co, and Al was 1.0) was prepared. The lithium-containing transition metal oxide (NCA), acetylene black (AB: conductive material), and polyvinylidene fluoride (PVdF: binder) were mixed in a mass ratio of NCA:AB:PVdF = 95:2.5:2.5, to which an appropriate amount of N-methyl-2-pyrrolidone (NMP) was further added, and stirred together, to prepare a positive electrode mixture slurry.

The positive electrode mixture slurry was applied onto both surfaces of a belt-shaped Al foil (positive electrode current collector), and dried, to form applied films of the positive electrode mixture. Next, the applied films were rolled using a roller, to form positive electrode mixture layers. The obtained laminate of the positive electrode current collector and the positive electrode mixture layers was cut into a belt shape of a predetermined size, using a cutting blade. Thus, a positive electrode was obtained.

### (Formation of protective layer)

Next, the positive electrode mixture slurry was applied onto both ends ES1, ES2 in the width direction of the belt-shaped positive electrode, and dried, to form protective layers containing the same components as the positive electrode mixture layer. In this way, a positive electrode having protective layers was obtained. At this time, the application region of the positive electrode mixture slurry onto the end face in the positive electrode end faces (the end face 11E of the positive electrode current collector 11 and the end face 12AE of the positive electrode mixture layer 12a in FIG. 2) was adjusted as appropriate so that the protective layer 13 as illustrated in FIGS. 1 and 2 was formed. The TD coverage rate of the end face CE of the electrode current collector with the protective layer at each of the ends ES1, ES2 was set to the values shown in Table 1. The LD coverage rate of the end face CE of the electrode current collector with the protective layer at each of the ends ES1, ES2 was set to approximately 100%. The TD coverage rate of the mixture layer end face 12AE with the protective layer at each of the ends ES1, ES2 was set to approximately 100%. The LD coverage rate of the mixture layer end face 12AE with the protective layer at each of the ends ES1, ES2 was set to approximately 100%. The mixture layer end faces 12BE at the ends ES1, ES2 were not covered with the protective layer.

The thickness per side of the positive electrode mixture layer was 80 µm. The thickness of the positive electrode current collector was 15 µm. The average thickness of the protective layer (average of T in FIG. 2) was 7.5 µm, which was 0.5 times as large as the thickness of the positive electrode current collector. In secondary batteries A1 to A3 in which the TD coverage rate was 5 to 95%, the average length of the protective layer in the thickness direction of the positive electrode current collector (average of L1 in FIG. 2) was in the range of 1 to 150 µm, which was 0.06 to 10 times as large as the thickness of the positive electrode current collector.

### (Production of negative electrode)

A negative electrode mixture slurry was prepared by kneading 100 parts by mass of artificial graphite, 1 part by mass of styrene-butadiene copolymer rubber (SBR), 1 part by mass of carboxymethyl cellulose (CMC), and an appropriate amount of water.

The negative electrode mixture slurry was applied onto both sides of a belt-shaped Cu foil (negative electrode current collector), and dried, to form applied films of the negative electrode mixture. Next, the applied films were rolled using a roller, to form negative electrode mixture layers. Lastly, the obtained laminate of the negative electrode current collector and the negative electrode mixture layers was cut into a belt shape of a predetermined size, to obtain a negative electrode.

### (Preparation of nonaqueous electrolyte)

Ethylene carbonate (EC) and dimethyl carbonate (DMC) were mixed in a volume ratio of EC:DMC = 30:70. In the resultant mixed solvent, LiPF₆ was dissolved at a concentration of 1 mol/L, and LiBF₂(C₂O₄) was dissolved at a concentration of 0.1 mol/L, to prepare a liquid nonaqueous electrolyte.

### (Fabrication of battery)

A positive electrode lead made of aluminum was attached at its end to the positive electrode obtained above. A negative electrode lead made of nickel was attached at its end to the negative electrode obtained above. The positive electrode and the negative electrode were wound, with a separator made of polyethylene interposed therebetween, to form a wound electrode group. The electrode group was housed in a bottomed cylindrical battery case serving as a negative electrode terminal. At this time, an upper insulating plate and a lower insulating plate were placed on the top and the bottom of the electrode group, respectively. Next, after injecting the nonaqueous electrolyte into the battery case, a metal sealing body serving as a positive electrode terminal was disposed at the opening of the battery case, to close the opening of the battery case. At this time, a resin insulating gasket was interposed between the sealing body and the opening end of the battery case. The other end of the positive electrode lead was connected to the sealing body, and the other end of the negative electrode lead was connected to the inner bottom surface of the battery case. In this way, a cylindrical nonaqueous electrolyte secondary battery (diameter 18 mm, height 65 mm) was fabricated. Note that A1 to A3 in Table 1 are of Examples, and B1 is of Comparative Example.

### [Evaluation]

With respect to each battery, the following evaluation was performed.

### (Crush test)

A constant-current charge was performed at a current of 0.5It (1675 mA) until the voltage reached 4.2V, and then, a constant-voltage charge was performed at a voltage of 4.2V until the current dropped to 67 mA. With respect to each battery after charging, a crush test was performed in a 25 °C environment.

Specifically, first, the battery was placed horizontally between two flat surfaces. The battery was continuously applied with a force until the force applied to the battery from the two surfaces reached 15 kN. After the battery crush test, the presence or absence of heat generation in the battery was checked. Five batteries were prepared each, to determine how many batteries among the five had generated heat.

### (Cycle Test)

Each of the obtained batteries was subjected to 500 cycles of charging and discharging repeated under the following conditions.

The cycle test was performed in a 25 °C environment. The battery was allowed to rest for 20 minutes between charging and discharging.

### (Charging)

A constant-current charge was performed at a current of 700 mA until the voltage reached 4.2 V, and then, a constant-voltage charging was performed at a voltage of 4.2 V until the current dropped to 35 mA.

### (Discharging)

A constant-current discharge was performed at a current of 700 mA until the voltage dropped to 3 V.

A ratio of the discharge capacity at the 500th cycle to the discharge capacity at the 1st cycle was determined as a capacity retention rate at the 500th cycle.

The evaluation results are shown in Table 1.

**[Table 1]**

| secondary battery | TD coverage rate of end face CE of positive electrode current collector with protective layer (%) | number of batteries which generated heat in crush test | capacity retention rate at 500th cycle (%) |
|---|---|---|---|
| A1 | 5 | 0/5 | 84 |
| A2 | 50 | 0/5 | 85 |
| A3 | 95 | 0/5 | 85 |
| B1 | 100 | 0/5 | 69 |

In the secondary batteries A1 to A3 and B1, in which the protective layers were formed on the positive electrode end faces, none of the batteries had generated heat in the crush test.

In the secondary batteries A1 to A3, in which the TD coverage rate was 95% or less, the capacity retention rate was significantly improved as compared to the secondary battery B1, in which the TD coverage rate was 100%.

Although the protective layers were formed at the positive electrode ends ES1, ES2 in the above Examples, the protective layers may also be formed at the positive electrode ends ES3, ES4 in addition to the positive electrode ends ES1, ES2. In secondary batteries in which the TD coverage rates at the ends ES1 to ES4 were set to 5%, 50%, and 95%, respectively, the capacity retention rates were also significantly improved, as in the case of the secondary batteries A1 to A3.

### [Industrial Applicability]

The secondary battery according to the present disclosure is useful as a main power source for mobile communication devices, portable electronic devices, electric cars, etc.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 10: electrode, 11: electrode current collector, 12a, 12b: electrode mixture layer, 13: protective layer

## Claims

1. An electrode for secondary batteries, comprising:
an electrode current collector in a form of a sheet;
an electrode mixture layer supported on a principal surface of the electrode current collector, and having an end face ME continuous with an end face CE of the electrode current collector; and
a protective layer partially covering the end face CE of the electrode current collector from a boundary between the electrode current collector and the electrode mixture layer, in a thickness direction of the electrode current collector.

2. The electrode for secondary batteries according to claim 1, wherein in the thickness direction of the electrode current collector, a coverage rate of the end face CE with the protective layer is 95% or less.

3. The electrode for secondary batteries according to claim 1, wherein an average thickness of the protective layer is 1 µm or more.

4. The electrode for secondary batteries according to claim 1, wherein the protective layer partially covers the end face CE, and in addition, covers at least a part of the end face ME.

5. The electrode for secondary batteries according to claim 4, wherein the protective layer has a thickness which is larger at an end on the electrode current collector side than at an end on the electrode mixture layer side.

6. The electrode for secondary batteries according to claim 4, wherein the protective layer has a thickness which is smaller at an end on the electrode current collector side than at an end on the electrode mixture layer.

7. The electrode for secondary batteries according to claim 4, wherein the protective layer has a thickness which is larger in a center portion than at both ends in the thickness direction of the electrode current collector.

8. The electrode for secondary batteries according to any one of claims 4 to 7, wherein an average length of the protective layer in the thickness direction of the electrode current collector is 10 µm or more and 200 µm or less.

9. The electrode for secondary batteries according to any one of claims 1 to 7, wherein the protective layer contains a same component as the electrode mixture layer.

10. A secondary battery, comprising:
a pair of electrodes; and an electrolyte, wherein
at least one of the pair of electrodes is the electrode for secondary batteries according to any one of claims 1 to 7.
